# EUROPÄISCHE PATENTSCHRIFT

(11) **EP 2 040 097 B1**
(45) Veröffentlichungstag und Bekanntmachung des Hinweises auf die Patenterteilung: **20.04.2011**
(21) Anmeldenummer: 08104606.2
(22) Anmeldetag: 02.07.2008
(51) Int. Cl.: G01V 8/20, G01S 17/48, G01S 7/481

(54) **Optoelektronischer Sensor**
Optoelectronic sensor
Capteur optoélectronique

(30) Priorität: 21.09.2007 DE 202007013315 U
(43) Veröffentlichungstag der Anmeldung: 25.03.2009
(73) Patentinhaber: SICK AG, 79183 Waldkirch (DE)
(72) Erfinder: Hörsch, Ingolf, Dr., 79312 Emmendingen (DE); Lang, Felix, 78418 Schliengen (DE); Yltchev, Georgy, 79194 Gundelfingen (DE); Auer, Patrick, 79106 Freiburg (DE)
(74) Vertreter: Ludewigt, Christoph

(56) Entgegenhaltungen:
- EP-A- 0 670 504
- WO-A-99/61938
- DE-A1- 10 308 085
- DE-A1- 19 850 270
- DE-U1-202006 005 876
- US-A1- 2005 184 301
- US-A1- 2006 200 903

## Beschreibung

Die Erfindung betrifft einen optoelektronischen Sensor nach dem Oberbegriff des Anspruchs 1.

Derartige Vorrichtungen werden in der Regel verwendet um festzustellen, ob sich ein Objekt in einem Vordergrundbereich oder einem Hintergrundbereich eines Überwachungsbereichs befindet.

Üblicherweise wird dabei nach dem Triangulationsprinzip gearbeitet. Eine Änderung des Abstands eines reflektierenden Objekts führt zu einer Verschiebung des entsprechenden Lichtflecks auf dem Empfänger des Sensors, beispielsweise einer Differenz-Fotodiode. Diese Verschiebung bewirkt eine entsprechende Änderung der Empfangssignale, welche von einer Auswerteeinheit weiterverarbeitet werden. Falls hierdurch die Differenz der Empfangssignale einen Differenzschwellenwert über- oder unterschreitet, wird von einem positiven auf ein negatives Gegenstandsfeststellungssignal umgeschaltet, oder umgekehrt. Der Differenzschwellenwert entspricht somit, bezüglich des Überwachungsbereichs, einem Schaltabstand.

Aus der DE 101 38 609 ist ein gattungsgemäßer optoelektronischer Sensor bekannt mit einem Sender und mehreren Empfangselementen, die jeweils ein Empfangssignal liefern und die zumindest in den Vordergrundbereich und den Hintergrundbereich unterteilt sind. Diese Unterteilung wird während einer Betriebsphase des Sensors ständig geändert, und zwar in Abhängigkeit von einem vorhergehenden Wechsel des Gegenstandsfeststellungssignals, insbesondere in unmittelbarer Folge eines derartigen Wechsels.

Diese Vorrichtung weist jedoch wesentliche Nachteile auf. So sind durch eine bisherige Anordnung von Sender, Empfänger und Auswerteeinheit auf einer gemeinsamen Platine einer Miniaturisierung des Sensors Grenzen gesetzt.

Die US 2005/0184301 A1 zeigt einen Triangulationssensor mit mehreren Sendelementen in einer Reihe und mehreren parallelen Empfangszeilen. Eine Sender-Empfängerachse verläuft parallel und beabstandet zu einer Gehäuselängsachse.

Die DE 103 08 085 A1 offenbart einen Sensor, der nach dem Triangulationsprinzip arbeitet. Auf einer gemeinsamen Leiterplatte ist dabei ein Sender, ein Empfänger und eine Auswerteeinheit angeordnet.

Die EP 0 670 504 A1 offenbart einen Triangulationssensor für ein Urinal, bei dem der Sender und Empfänger in Strahlrichtung versetzt zueinander angeordnet sind.

Aus DE 198 50 270 A1 ist ein Distanzsensor, der nach dem Triangulationsprinzip arbeitet, bekannt. Dabei wird eine Distanz durch die Lage eines Flächenschwerpunkts auf einem Empfänger bestimmt.

Die DE 20 2006 005 876 U1 zeigt einen Triangulationssensor, dessen Sender und Empfänger in Strahlrichtung versetzt zueinander angeordnet sind.

Die US 2006/0200903 A1 offenbart einen Triangulationssensor für einen automatischen Wasserhahn, bei dem Sender und Empfänger in Strahlrichtung versetzt zueinander angeordnet sind.

Die WO99/61938 A1 offenbart einen Sensor für einen Wasserhahn.

Der Erfindung liegt die Aufgabe zugrunde, einen verbesserten miniaturisierten optoelekronischen Sensor bereitzustellen.

Die Aufgabe wird erfindungsgemäß nach Anspruch 1 mit einem nach dem Triangulationsprinzip arbeitenden optoelektronischen Sensor gelöst, mit einem Gehäuse, mit zumindest einem Sender zum Aussenden von Sendelicht in Richtung eines Überwachungsbereichs und einem Empfänger mit wenigstens zwei auf einer Sender-Empfängerachse angeordneten Empfangselementen zur Ausgabe von wenigstens zwei Empfangssignalen in Abhängigkeit von empfangenem Sendelicht. Die Empfangssignale sind einem Vordergrundbereich oder einem Hintergrundbereich des Überwachungsbereichs zugeordnet. Eine Auswerteeinrichtung ist vorgesehen zur Feststellung, ob sich ein Objekt oder kein Objekt in dem Vordergrundbereich oder dem Hintergrundbereich des Sensors befindet und in Abhängigkeit von dem Ergebnis dieses Vergleiches ist ein positives oder negatives Gegenstandsfeststellungssignal erzeugbar, wobei der Sender, der Empfänger und die Auswerteeinrichtung auf einer gemeinsamen Leiterplatte untergebracht sind und der Empfänger und die Auswerteeinrichtung benachbart zueinander angeordnet sind. Die Sender-Empfängerachse ist in einem Winkel zu einer Gehäuselängsachse angeordnet und der Sender im Schnittpunkt der Sender-Empfängerachse mit der Gehäuselängsachse angeordnet.

Durch die erfindungsgemäße Anordnung von Sender, Empfänger und Auswerteeinrichtung kann der optoelektronische Sensor in seiner Baugröße enorm reduziert werden, wodurch der Sensor einfacher und kostengünstiger herstellbar ist. Durch die kleinere Bauform wird der Sensor auch vielseitiger einsetzbar. Ungewöhnlicherweise und für eine optische Justage an sich unvorteilhaft ist der Empfänger nach der Erfindung durch die Verschwenkung um einen Winkel oder Verschiebung parallel zur Gehäuselängsachse des Sensors nicht mehr mittig auf der Gehäuselängsachse des Sensors angeordnet, wodurch die Empfangselemente in ihrer Ausrichtung gegenüber dem Gehäuse auch um einen Winkel verkippt oder parallel verschoben sind. Der Empfänger ist vorzugsweise als Zeile mit mehreren Empfangselementen ausgebildet. In einem Abstand zu der Empfängerzeile ist dabei der Sender angeordnet. Vor dem Sender ist eine Sendelinse angeordnet zur Fokussierung des Sendelichts. Dem Empfänger ist eine Empfangslinse vorgeordnet zum Fokussieren des Empfangslichtes auf den Empfänger. Durch die erfindungsgemäße Anordnung des Senders, des Empfängers und der Auswerteeinheit wird der Sensor entsprechend schmal und gleichzeitig ist aber noch genug Platz vorhanden für die Sendelinse und die Empfangslinse. Weiter sind Schaltpunkte des Sensors bei einem seitlich in den Überwachungsbereich eintretenden Objekts unterschiedlich, abhängig von der Eintrittsrichtung.

In Weiterbildung der Erfindung ist der Sender mittig zur Leiterplatte auf einer Leiterplattenlängsachse der Leiterplatte angeordnet. Wenn die Leiterplattenlängsachse mit der Gehäuselängsachse zusammenfällt, ist dadurch eine einfache mechanische Ausrichtung und Montage des Sensors möglich. Der Sensor muss lediglich anhand der äußeren Abmessungen auf ein zu detektierendes Ziel ausgerichtet werden. Der Sensor braucht hierzu noch nicht in Betrieb genommen zu werden. Lediglich zu einer Feinjustage wird der Sender im eingeschalteten Zustand ausgerichtet. Durch die mittige Anordnung des Senders kann die Sendelinse maximal groß, entsprechend der maximalen Breite des Sensors ausgeführt werden. Dadurch wird die Reichweite des Sensors, sowie eine Detektionsempfindlichkeit des Sensors weiter erhöht.

In Weiterbildung der Erfindung beträgt der Winkel zwischen Sender-Empfängerachse und Gehäuselängsachse zwischen 5° und 30°, insbesondere 13°. Bei den angegebenen Winkeln ist die Bauform des Sensors besonders kompakt und die Sender-Empfängerachse und die Gehäuselängsachse aber nicht zu weit gegeneinander verdreht. Bei diesen Winkeln ist das Verhältnis zwischen der minimalen Breite des Sensors und einer maximalen Fläche der Sende- und Empfangslinse optimal. Eine Vergrößerung des Winkels über 30° würde zu einer Verbreiterung des Sensors oder zu einer Verkleinerung der Empfangslinse führen. Umgekehrt würde eine Verkleinerung des Winkels unter 5° auch zu einer Verbreiterung des Sensors führen, um noch genügend Platz für die Auswerteeinrichtung vorsehen zu können.

Nach einer weiteren Ausführungsform ist ein Abstand zwischen Empfänger und Auswerteeinrichtung kleiner als 1mm. Dadurch werden die Störeinflüsse, die sich auf die Verbindungsleitungen zwischen der Auswerteeinrichtung und der Empfangselemente und damit auf die Signalqualität auswirken, minimiert. Die Ausgangssignale der Empfangselemente sind empfindliche Analogsignale, deren Qualität die Messgenauigkeit entscheidend erhöhen. Von außen auftretende Störsignale, wie beispielsweise EMV-Störungen sollen dabei so gut wie möglich unterdrückt werden. Dies wird unter anderem durch möglichst kurze Verbindungsleitungen zwischen der Auswerteeinrichtung und dem Empfänger erreicht. Die Auswerteeinrichtung wird dabei direkt neben dem Empfänger angeordnet. Die Verbindungsleitungen werden durch Bond-Drähte hergestellt, die erfindungsgemäß eine möglichst minimale Länge, insbesondere kleiner 1 mm aufweisen.

In einer besonderen Ausführungsform der Erfindung ist dem Sender und dem Empfänger ein einstückiger Tubus zugeordnet. Durch den Tubus, welcher die Sende- und Empfangslinse aufnimmt, können diese automatisch exakt zueinander ausgerichtet werden. Eine nachträgliche genaue Justage der Sende- und Empfangslinse entfällt hierdurch. Weiter weist der Tubus mechanische Aufnahmen, beispielsweise Stifte zur Aufnahme und Arretierung der Leiterplatte mit dem Empfänger und Sender auf. Dadurch wird automatisch eine korrekte Ausrichtung des Senders zu der Sendelinse und des Empfängers zu der Empfangslinse hergestellt. Somit wird die gesamte geometrische Ausrichtung der notwendigen optischen und elektronischen Bauelemente durch den einstückigen Tubus bestimmt. Eine Verschiebung der Bauteile zueinander aufgrund von Temperaturänderungen ist damit wirksam verhindert.

In Weiterbildung der Erfindung ist dem Empfänger eine Empfängerlinse vorgeordnet, die randseitig eine ebene begrenzende Fläche aufweist. Dadurch kann die Empfangslinse entsprechend groß im Durchmesser ausgebildet werden, gleichzeitig aber der Sensor entsprechend schmal ausgeführt werden. Die Empfangslinse ist optisch symmetrisch ausgeführt, lediglich ein äußerer Teilbereich der Linse wird durch eine ebene begrenzende Fläche abgeschnitten. Dadurch wird lediglich eine geringere Lichtmenge auf das Empfangselement fokussiert. Da durch die Empfangslinse keine exakte Abbildung des empfangenen Lichts auf den Empfänger durchgeführt wird, sind die mit der unsymmetrischen Form begründeten Abbildungsfehler zu vernachlässigen.

In einer weiteren Ausführungsform ist zwischen der Leiterplatte und dem Tubus eine metallische Abschirmung mit wenigstens zwei Öffnungen für den Sender und den Empfänger vorgesehen. Durch diese Abschirmung werden äußere Störeinflüsse auf den Empfänger und die Auswerteeinrichtung wirksam unterdrückt. Die metallische Abschirmung verbessert dabei die elektromagnetische Verträglichkeit (EMV) des Sensors. Gerade beim Einsatz in Industrieumgebungen sind äußere Störeinflüsse in Form von elektrischen und magnetischen Feldern hoch und zur Verbesserung einer Messgenauigkeit des Sensor zu unterdrücken. Die Öffnungen der metallischen Abschirmung sind weiter als Blenden oder Apertur für den Sender bzw. den Empfänger ausgebildet. Dadurch entfallen weitere zusätzliche Komponenten hierzu. Die metallische Abschirmung wird mit Hilfe der Stifte des Tubus zwischen Leiterplatte und Tubus positioniert. Hierdurch entfällt eine zusätzliche mechanische Justage. Die metallische Abschirmung wird aus Kupfer oder andern geeigneten Materialien ausgeführt. Die Abschirmung kann auch kastenförmig mit wenigstens 3 Seiten ausgeführt werden, um eine Abschirmung in weiteren Raumrichtungen zu erreichen.

In Weiterbildung der Erfindung weist der Sendestrahl bei einem Abstand von 50mm vom Sender einen Durchmesser kleiner 2mm auf. Dadurch wird eine Empfindlichkeit, eine Reichweite oder eine Auflösung des Sensors erhöht. Darüber hinaus lässt sich ein Sensor dadurch besser justieren.

In einer weiteren Ausführungsform weist die Leiterplatte einen Anschluss für wenigstens zwei Kabel auf und es ist eine Lötadapterplatine vorgesehen, welche mit der Leiterplatte verlötet ist zum Anschluss wenigstens zweier weiterer Kabel. Um notwendige Anschlüsse an dem Miniatursensor vorsehen zu können, wird erfindungsgemäß auf der Leiterplatte eine Lötadapterplatine aufgelötet. Auf der Leiterplatte sind zunächst zwei Anschlüsse nebeneinander vorgesehen. Zusätzlich hierzu werden durch den Lötadapter parallel zur Leiterplatte weitere Anschlüsse vorgesehen, ohne eine Breite des Sensors zu erhöhen. Die Anschlüsse werden also übereinander bereitgestellt, um den Anschlussraum möglichst gering zu halten. Anschlussleitungen werden beispielsweise direkt an der Leiterplatte und dem Lötadapter angelötet. Es kann aber auch vorgesehen sein, die Anschlusskabel mit alternativen Verbindungstechniken auf der Leiterplatte anzubringen.

Im Folgenden wird die Erfindung an Hand von Ausführungsbeispielen unter Bezugnahme auf die Zeichnung im Einzelnen erläutert.

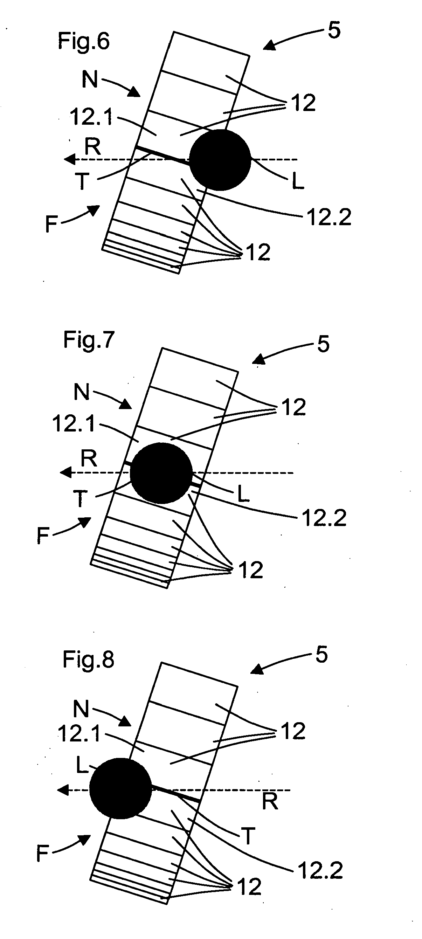

In der Zeichnung zeigt:
Figur 1
   eine schematische Darstellung zum Funktionsprinzip eines erfindungsgemäßen optoelektronischen Sensors;
Figur 2
   eine schematische Darstellung eines Sensors nach dem Stand der Technik;
Figur 3
   eine schematische Darstellung eines Sensors gemäß der Erfindung;
Figur 4
   ein Differenz- und Summensignal in Abhängigkeit vom Tastabstand für unterschiedliche Schwellenwerte;
Figur 5
   ein Differenz- und Summensignal abhängig von einem vorbeibewegten Objekt entsprechend Figur 6 bis 8;
Figur 6 bis 8
   eine schematische Darstellung eines Empfängers bei einem Messvorgang;
Figur 9
   eine schematische Darstellung einer Lötadapterplatine zum Anschluss des Sensors.

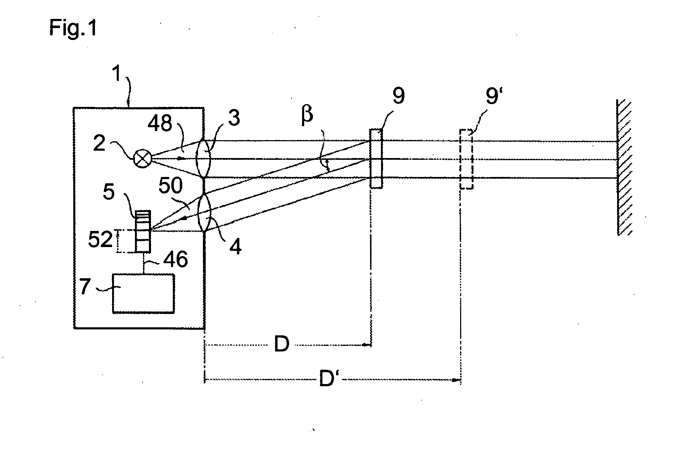

Figur 1 zeigt das Funktionsprinzip eines erfindungsgemäßen optoelektronischen Sensors 1. Dieser enthält einen Sender 2, der sich im Wesentlichen in der Brennebene einer am Gehäuse 32 des Sensors 1 angeordneten Sendelinse 3 befindet. Das Gehäuse 32 des Sensors 1 weist weiterhin eine der Sendelinse 3 benachbarte Empfangslinse 4 auf. Innerhalb des Sensors 1, im Bereich der Bildebene der Empfangslinse 4, befindet sich ein Empfänger 5 dergestalt, dass seine lichtempfindliche Fläche im Wesentlichen parallel zur Bildebene der Empfangslinse 4 angeordnet ist und dass der Mittelpunkt seiner lichtempfindlichen Fläche von der Hauptachse der Empfangslinse 4 weg vom Sender 2 seitlich versetzt ist. Über mehrere Sensor signalausgänge 46, von denen in Fig. 1 nur einer dargestellt ist, ist der Empfänger 5 mit einer ebenfalls innerhalb des Sensors 1 befindlichen Auswerteeinrichtung 7 verbunden. Weiterhin ist in Fig. 1 ein vom Sender 2 ausgehendes, die Sendelinse 3 durchdringendes Sendelichtbündel 48 eingezeichnet, das außerhalb des Sensors 1 einen näherungsweise parallelen Verlauf aufweist. Im Überwachungsbereich des Sensors 1, in einem Abstand D vom Sensor 1, befindet sich ein Objekt 9, welches das Licht des Sendelichtbündels 8 reflektiert. Ein Teil des reflektierten Lichts, der durch die Empfangslinse in das Innere des Sensors 1 auf den Empfänger 5 gelangt, bildet das Empfangslichtbündel 50. Der Abstand des Mittelpunkts des den Empfänger 5 beaufschlagenden Lichtflecks von dem dem Lichtsender 2 abgewandten Ende des Lichtsensors 5 ist als Strahlablenkung 52 bezeichnet. Außerhalb des Sensors 1 stehen das Sendelichtbündel und das Empfangslichtbündel im Wesentlichen in einem Strahlwinkel β zueinander. Außerdem ist in Fig. 1 im Überwachungsbereich des Sensors 1 ein weiterer Gegenstand gestrichelt eingezeichnet, der als Referenzobjekt 9' in einem Bezugs-Abstand D'vom Sensor 1 angeordnet ist. Der Empfänger 5 ist ortsauflösend ausgebildet, d. h. seine Ausgangssignale liefern eine Information darüber, welcher Bereich seiner lichtempfindlichen Fläche vom Empfangslichtbündel beaufschlagt ist. Falls sich der Abstand D des Objekts 9 vom Sensor 1 verändert, ändert sich auch der Strahlwinkel β und somit die Strahlablenkung 52 entlang der lichtempfindlichen Fläche des Lichtsensors 5. Die Ausgangssignale des Empfängers 5 werden über Sensor-Signalausgänge 46 der Auswerteeinrichtung zugeführt. Diese ist derart ausgebildet, dass sie unterschiedliche Ausgangssignale des Empfängers 5 verschiedenen Abständen D des Objekts 9 vom Sensor zuzuordnen vermag.

Der Empfänger 5 besteht aus mehreren Empfangselementen, die unterschiedlich große Abmessungen und Flächen aufweisen. Da sich der Lichtfleck auf dem Empfänger bei großen Abständen D nur wenig auf dem Empfänger 5 ändert, sind die Abstände der Empfangselemente für einen Fernbereich kleiner. Je näher sich das Objekt 9 dem Sensor 1 nähert, desto größer ist auch die Ablenkung 52 des Lichtflecks auf dem Empfänger 5. Dadurch können die Empfangselemente für den Nahbereich zunehmend größere Flächen aufweisen.

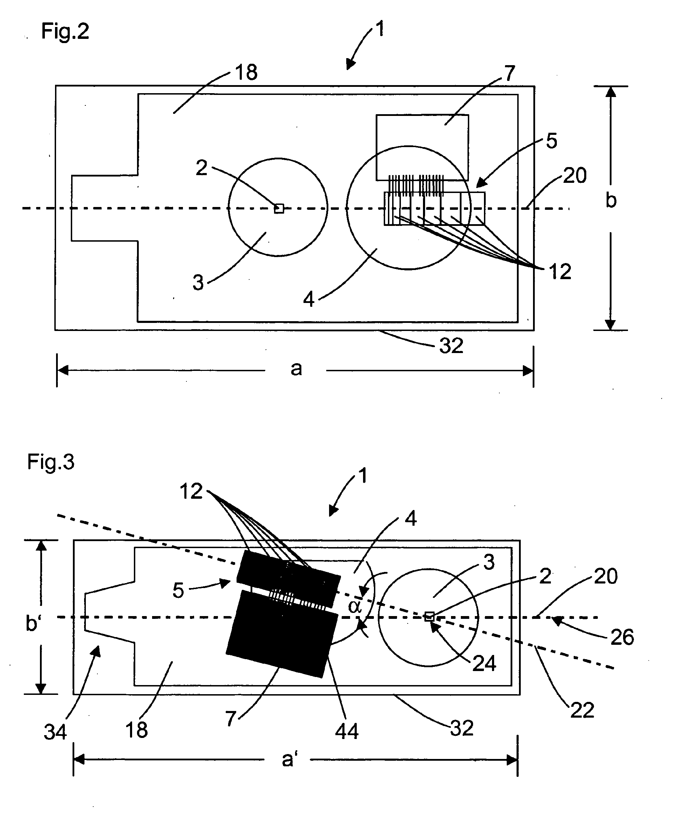

Figur 2 zeigt eine schematische Anordnung von Sender 2, Empfänger 5 und Auswerteeinrichtung 7 auf einer Leiterplatte 18 nach dem Stand der Technik. Ergänzend sind schematisch die Lage der Sendelinse 3 und der Empfangslinse 4 angegeben. Der Sender 2 und der Empfänger 5 sind entlang einer Gehäuselängsachse 20 des Gehäuses 32 mit der Länge a mittig zu der Breite b des Gehäuses 32 oder der Leiterplatte 18 untergebracht. Dadurch ist die Anordnung des Senders 2 und des Empfängers 5 symmetrisch zu den äußeren Abmessungen des Gehäuses 32, wodurch der Sensor 1 einfach ausrichtbar ist. Eine Auswerteeinheit 7 ist räumlich nahe an dem Empfänger 5 positioniert. Der Sender 2 liegt dabei in einem Brennpunkt der Sendelinse 3 und der Empfänger 5 in einer Brennebene der Empfangslinse 4.

Figur 3 zeigt den schematischen Aufbau der Leiterplatte 18 des erfindungsgemäßen Sensors 1 in etwa den gleichen Maßstabsverhältnissen wie in Figur 2. Die Leiterplatte 18 und das Gehäuse 32 weisen ungefähr die selbe Länge a' auf wie die Leiterplatte 18 aus Figur 2. Jedoch ist die Breite b' wesentlich geringer als in dem Beispiel aus Figur 2. Der Sender 2 ist entlang der Gehäuselängsachse 20 oder einer Leiterplattenlängsachse 26 mittig zu der Breite b' angeordnet. Der Empfänger 5 ist in einem Winkel α verkippt zu der Gehäuselängsachse 20 entlang einer Sender-Empfängerachse 22 angeordnet. Die Auswerteeinrichtung 7 ist eng neben dem Empfänger 5 angeordnet und über möglichst kurze Verbindungsleitungen 44 mit dem Empfänger 5 verbunden. Damit ist auch die Auswerteeinrichtung 7, die als IC ausgebildet ist, in dem gleichen Winkel α verkippt angeordnet.

Die Gehäuselängsachse 20 und die Sender-Empfängerachse 22 schneiden sich an dem Punkt, an dem der Sender 2 positioniert ist. Durch die erfindungsgemäße Anordnung sind der Sender 2 und der Empfänger 5 auf einer gemeinsamen Sender-Empfängerachse 22 angeordnet, die gegenüber dem Gehäuse 32 jedoch verdreht ist, wodurch der Sensor 1 in der Breite b' reduziert werden kann. Gleichzeitig ist jedoch der Sender 2 weiterhin mittig in der Breite b' des Sensors 1 angeordnet, was eine mechanische Justierung des Sensors 1 erleichtert.

Die Sender-Empfängerachse 22 kann aber gemäß der Erfindung auch in einer nicht dargestellten Ausführungsform parallel und beabstandet zur Gehäuselängsachse 20 verlaufen, wodurch lediglich der Sender 2 nicht mehr mittig in der Breite b' liegt.

Eine Sendelinse 3 ist derart angeordnet, dass in ihrem Brennpunkt oder ihrer Brennebene der Sender 2 liegt. Die Empfängerlinse 4 ist derart angeordnet, dass in ihrer Brennebene der Empfänger 5 liegt. Da die Empfängerlinse 4 nun nicht mehr mittig zur Breite b' angeordnet ist, ist eine Seite der Empfangslinse 4 abgeflacht, um den Sensor 1 nicht unnötig zu vergrößern. Durch den fehlenden Linsenbestandteil reduziert sich im Wesentlichen lediglich eine Empfangslichtmenge. Diese geringere Empfangslichtmenge kann aber problemlos durch einen stärkeren Sender 2 oder eine empfindlichere Auswerteeinrichtung 7 ausgeglichen werden. Abbildungsfehler, die sich aufgrund des fehlenden Linsenbestandteils ergeben, sind für diese Anwendung vernachlässigbar.

Wie bereits in Figur 1 erläutert, weist der Empfänger 5 aus Figur 3 mehrere Empfangselemente 12 auf, die unterschiedlich große Abmessungen und Flächen aufweisen. Die Empfangselemente 12 mit den geringeren Flächen sind dabei dem Fernbereich, und die Empfangselemente 12 mit den größeren Flächen dem Nahbereich zugeordnet. Zur Beurteilung, in welcher Entfernung sich ein zu detektierendes Objekt befindet, werden die Signale der einzelnen Empfangselemente 12 durch die Auswerteeinrichtung 7 ausgewertet und ein entsprechendes Schaltsignal erzeugt.

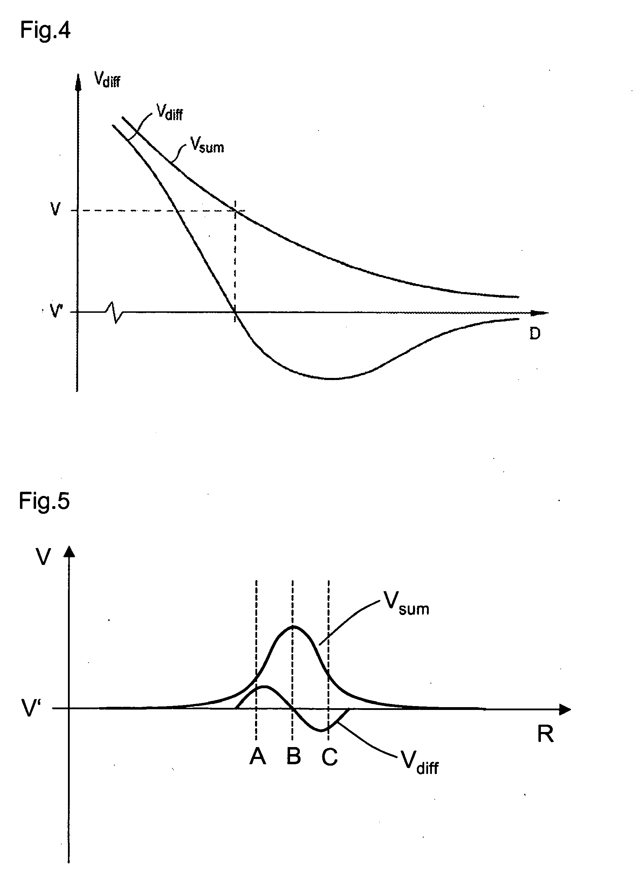

Bei dem Sensor 1 sind also mehrere Empfangselemente 12 vorgesehen, die jeweils ein Empfangssignal liefern und die zumindest in einen Vordergrundbereich und einen Hintergrundbereich unterteilt sind. Diese Unterteilung wird je nach zu detektierender Entfernung festgelegt. Bei einem zu detektierenden Abstand ist vorgesehen, dass ein Differenzsignal V_{diff}, gemäß Figur 4 zu Null wird. Dies wird vereinfacht dadurch erreicht, dass die Signale der Empfangselemente mit Faktoren versehen werden und die Signale des Hintergrundbereiches von den Signalen des Vordergrundbereiches abgezogen werden. Dies ist im Detail in der Beschreibung der DE 101 38 609 A1 näher erläutert. Ausgehend von dieser Aufteilung und Verrechnung der Signale kann ein Signal V_{diff} erzeugt werden, dass abhängig von dem Abstand D eines Objektes einen veränderlichen Wert liefert, wobei sich bei der gewünschten Detektionsweite das Vorzeichen ändert. Parallel hierzu kann aus allen oder ausgewählten Empfangselementen ein Summensignal Vₛᵤₘ erzeugt werden, welches ein zweites Signal liefert, das proportional zum Abstand D eines Objektes ist. Das Summensignal Vₛᵤₘ gibt dabei Auskunft darüber, wie viel Licht insgesamt von dem zu detektierenden Objekt reflektiert wird. Je näher das Objekt im Erfassungsbereich an dem Sensor ist, desto höher ist auch der empfangene Pegel. Die beiden Signale können jeweils getrennt voneinander oder auch zusammen ausgewertet werden.

Zur Erläuterung der Signale aus Figur 5 sei angenommen, dass ein Objekt in einem festen Abstand seitlich durch den Erfassungsbereich hindurchbewegt wird. Ergänzend wird hierzu auf die Figuren 6 bis 8 Bezug genommen. Figur 6 zeigt vereinfacht den Empfänger 5 des erfindungsgemäßen Sensors. Die Empfangselemente 12 sind dabei in einen Nahbereich N und einen Fernbereich F unterteilt. Die Trennung erfolgt dabei durch einen elektronisch festlegbaren Trennsteg T. Fällt ein Lichtfleck L, der aufgrund der Reflexion an dem Objekt auf dem Empfangselement hervorgerufen wird, genau mittig auf die beiden, dem Trennsteg T benachbarten Empfangselemente 12, so ist das Differenzsignal V_{diff} aus Figur 4, Position B gerade Null und ein Schaltsignal wird ausgegeben.

Der Lichtfleck L bewegt sich dabei quer über den Empfänger in Richtung R. Aufgrund der Winkelanordnung des Empfängers 5 zum Gehäuse wandert der Lichtfleck L nicht parallel zu den länglich ausgebildeten Empfangselementen 12, sondern überstreicht diese in dem bestimmten Winkel. Obwohl das Objekt in einem festen Abstand vor dem Sensor vorbeigeführt wird, wandert der Lichtfleck L seitlich von dem Nahbereichselement 12.1, (Position A in Figur 6) in Richtung des Trennstegs (Position B in Figur 7) und dann weiter in Richtung des Fernelements 12.2 (Position C in Figur 8). Die dabei erzeugten Signale Vₛᵤₘ und V_{diff} sind hierzu schematisch in Figur 5 dargestellt.

Das Summensignal Vₛᵤₘ zeigt an der Position B (vgl. auch Figur 7) ein Maximum, da dort der Lichtfleck von dem Empfangselement voll erfasst wird und daher eine maximale Signalamplitude erzeugt. Gleichzeitig ist das Differenzsignal V_{diff} Null, da der Lichtfleck zur einen Hälfte ein Empfangselement des Vordergrundbereiches und zur anderen Hälfte ein Empfangselement des Hintergrundbereiches abdeckt. An der Position A (vgl. Figur 6) ist das Differenzsignal V_{diff} positiv, da vorwiegend ein Nahbereichselement von dem Lichtfleck beaufschlagt wird. Das Summensignal Vₛᵤₘ hat nicht den maximalen Wert, da nur ein Teil des Lichtflecks auf den Empfänger fällt. In Position C (vgl. Figur 8) weist das Summensignal Vₛᵤₘ auch nicht den maximalen Wert auf, da auch hier wiederum nur ein Teil des Lichtflecks auf den Empfänger fällt. Das Differenzsignal V_{diff} ändert aber sein Vorzeichen, da nun hauptsächlich ein Element des Fernbereichs von dem Lichtfleck beaufschlagt wird. Ausgehend von dem Differenzsignal ist es nun möglich zu unterscheiden, aus welcher Richtung sich das zu detektierende Objekt dem Sensor nähert und zum anderen können auch unterschiedliche Schaltpunkte vorgesehen sein, abhängig davon, von welcher Seite sich ein Objekt dem Sensor nähert.

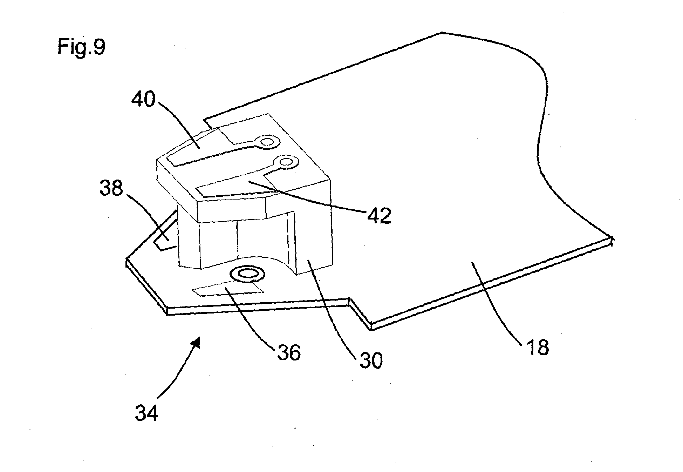

Figur 9 zeigt einen vergrößerten Ausschnitt des Anschlussraums 34 aus Figur 3 zum Anschluss von vier Leitungen an den Sensor. Dabei werden zwei Leitungen direkt auf der Leiterplatte 18 an den Anschlüssen 36 und 38 angelötet. Auf die Leiterplatte wird eine Lötadapterplatine 30 aufgelötet, aufgeklebt oder mechanisch fixiert, die wenigstens zwei weitere Anschlüsse 40 und 42 als Lötflächen zur Verfügung stellt, die mit der Leiterplatte 18 elektrisch über Lötverbindungen verbunden sind. Dadurch kann auf engstem Raum ein Anschluss der kleinen Leiterplatte des Sensors vorgenommen werden.

### Bezugszeichen:

1 optoelektronischer Sensor
2 Sender
3 Sendelinse
4 Empfängerlinse
5 Empfänger
6 Signalausgänge
7 Auswerteeinrichtung
9 Objekt
9' Referenzobjekt
12 Empfangselemente
18 Leiterplatte
20 Gehäuselängsachse
22 Sender-Empfängerachse
24 Schnittpunkt
26 Leiterplattenlängsachse
28 Abstand
30 Lötadapterplatine
32 Gehäuse
34 Anschlussraum
36, 38, 40, 42 Anschlüsse
44 Verbindungsleitungen
46 Sensorsignalausgänge
48 Sendelichtbündel
50 Empfangslichtbündel
52 Strahlablenkung
α Winkel
β Winkel
D, D'Abstand
N Nahelemente
F Fernelemente
a, a' Länge
b, b' Breite
L Lichtfleck
T Trennsteg
R Richtung
A, B, C Position

## Patentansprüche

1. Optoelektronischer Sensor nach dem Triangulationsprinzip mit einem Gehäuse (32) welches,
- einen Sender (2) zum Aussenden von Sendelicht in Richtung eines Überwachungsbereichs,
- einen Empfänger (5) mit wenigstens zwei auf einer Sender-Empfängerachse (22) angeordneten Empfangselementen (12) zur Ausgabe von Empfangssignalen in Abhängigkeit von empfangenem Sendelicht, wobei die Empfangssignale einem Vordergrundbereich oder einem Hintergrundbereich des Überwachungsbereichs zugeordnet sind und
- eine Auswerteeinrichtung (7) zur Feststellung, ob sich ein Objekt (9, 9') in dem Vordergrundbereich oder dem Hintergrundbereich des Sensors (1) befindet und ein positives oder negatives Gegenstandsfeststellungssignal erzeugbar ist, aufweist,
- wobei der Sender (2), der Empfänger (5) und die Auswerteeinrichtung (7) auf einer gemeinsamen Leiterplatte (18) untergebracht sind und
- das Sendelicht in einem Winkel von 90° zur Leiterplatte (18) und zur Sender-Empfängerachse (22) ausgesendet wird,
- der Empfänger (5) und die Auswerteeinrichtung (7) benachbart zueinander angeordnet sind,
- die Sender-Empfängerachse (22) in einem Winkel (α) zu einer Gehäuselängsachse (20) angeordnet ist und der Sender (2) im Schnittpunkt (24) der Sender-Empfängersachse (22) mit der Gehäuselängsachse (20) angeordnet ist **dadurch gekennzeichnet, dass**
- die Empfangselemente (12) in ihrer Ausrichtung gegenüber dem Gehäuse auch um den Winkel (α) verkippt sind, und der Winkel (α) zwischen Sender-Empfängerachse (22) und Gehäuselängsachse (20) zwischen 5° und 30° beträgt.

2. Optoelektronischer Sensor nach Anspruch 1, **dadurch gekennzeichnet, dass** der Sender (2) mittig zur Leiterplatte (18) auf einer Leiterplattenlängsachse (26) angeordnet ist.

3. Optoelektronischer Sensor nach einem der vorhergehenden Ansprüche, **dadurch gekennzeichnet, dass** der Winkel (α) zwischen Sender-Empfängerachse (22) und Gehäuselängsachse 13° beträgt.

4. Optoelektronischer Sensor nach einem der vorhergehenden Ansprüche, **dadurch gekennzeichnet, dass** ein Abstand (28) zwischen dem Empfänger (5) und der Auswerteeinrichtung (7) kleiner 1 mm beträgt.

5. Optoelektronischer Sensor nach einem der vorhergehenden Ansprüche, **dadurch gekennzeichnet, dass** dem Sender (2) und dem Empfänger (5) ein einstückiger Tubus zugeordnet ist.

6. Optoelektronischer Sensor nach einem der vorhergehenden Ansprüche, **dadurch gekennzeichnet, dass** dem Empfänger (5) eine Empfängerlinse (4) vorgeordnet ist, die randseitig eine ebene begrenzende Fläche aufweist

7. Optoelektronischer Sensor nach einem der vorhergehenden Ansprüche, **dadurch gekennzeichnet, dass** zwischen der Leiterplatte (18) und dem Tubus eine metallische Abschirmung mit wenigstens zwei Öffnungen für den Sender (2) und den Empfänger (5) vorgesehen ist.

8. Optoelektronischer Sensor nach einem der vorhergehenden Ansprüche, **dadurch gekennzeichnet, dass** das Sendelicht, durch eine Sendelinse zur Fokussierung des Sendelichts bei einem Abstand von 50mm vom Sender (2) einen Durchmesser kleiner 2mm aufweist.

9. Optoelektronischer Sensor nach einem der vorhergehenden Ansprüche, **dadurch gekennzeichnet, dass** die Leiterplatte (18) einen Anschluss (36, 38) für wenigstens zwei Kabel aufweist und eine Lötadapterplatine (30) vorgesehen ist, welche mit der Leiterplatte (18) verlötet ist zum Anschluss wenigstens eines weiteren Kabels.

## Claims

1. An optoelectronic sensor in accordance with the triangulation principle having a housing (32) which has
- a transmitter (2) for transmitting transmitted light in the direction of a monitored zone;
- a receiver (5) having at least two receiver elements (12) arranged on a transmitter/ receiver axis (22) for outputting received signals in dependence on received transmitted light, wherein the received signals are associated with a foreground zone or with a background zone of the monitored zone; and
- an evaluation device (7) for determining whether an object (9, 9') is located in the foreground zone or in the background zone of the sensor (1) and a positive or a negative real object determination signal can be generated,
- wherein the transmitter (2), the receiver (5) and the evaluation device (7) are accommodated on a common circuit board (18); and
- the transmitted light is transmitted at an angle of 90° to the circuit board (18( and to the transmitter/receiver axis (22);
- the receiver (5) and the evaluation device (7) are arranged adjacent to one another;
- the transmitter/ receiver axis (22) is arranged at an angle (α) to a longitudinal housing axis (20) and the transmitter (2) is arranged at an intersection (24) of the transmitter/ receiver axis (22) with the longitudinal housing axis (20),
**characterised in that**
- the receiver elements (12) are also tilted by the angle (α) in their alignment with respect to the housing and the angle (α) between the transmitter/ receiver axis (22) and the longitudinal housing axis (20) amounts to between 5° and 30".

2. An optoelectronic sensor in accordance with claim 1, **characterised in that** the transmitter (2) is arranged centrally to the circuit board (18) on a longitudinal circuit board axis (26).

3. An optoelectronic sensor in accordance with any one of the preceding claims, **characterised in that** the angle (α) between the transmitter/receiver axis (22) and the longitudinal housing axis (20) amounts to 13°.

4. An optoelectronic sensor in accordance with any one of the preceding claims, **characterised in that** a spacing (28) between the receiver (5) and the evaluation unit (7) amounts to less than 1 mm.

5. An optoelectronic sensor in accordance with any one of the preceding claims, **characterised in that** a one-piece tube is associated with the transmitter (2) and the receiver (5).

6. An optoelectronic sensor in accordance with any one of the preceding claims, **characterised in that** a receiver lens (4) which has a planar bounding surface at the marginal side is arranged before the receiver (5).

7. An optoelectronic sensor in accordance with any one of the preceding claims, **characterised in that** a metallic screen having at least two openings for the transmitter (2) and the receiver (5) is provided between the circuit board (18) and the tube.

8. An optoelectronic sensor in accordance with any one of the preceding claims, **characterised in that** the transmitted light has a diameter less than 2 mm at a spacing of 50 mm from the transmitter (2) through a transmission lens for focusing the transmitted light.

9. An optoelectronic sensor in accordance with any one of the preceding claims, **characterised in that** the circuit board (18) has a connection (36, 38) for at least two cables and a solder adapter plate (30) is provided which is soldered to the circuit board (18) for the connection of at least one further cable.

## Revendications

1. Capteur optoélectronique selon le principe de triangulation comprenant un boîtier (32), qui comprend
- un émetteur (2) pour émettre de la lumière émise en direction d'une zone de surveillance,
- un récepteur (5) avec au moins deux éléments récepteurs (12) agencés sur un axe émetteur/récepteur (22) pour fournir des signaux de réception en fonction de la lumière reçue, les signaux de réception étant attribués à une plage d'avant-plan ou à une plage d'arrière-plan de la zone de surveillance, et
- un système d'évaluation (7) pour constater si un objet (9, 9') se trouve dans la plage d'avant-plan ou dans la plage d'arrière-plan du capteur (1) et au moyen duquel un signal de constatation d'objet positif ou négatif peut être engendré,
- dans lequel l'émetteur (2), le récepteur (5) et le système d'évaluation (7) sont logés sur une carte à circuits imprimés (18) commune, et
- la lumière émise est émise sous un angle de 90° par rapport à la carte à circuits imprimés (18) et par rapport à l'axe émetteur/récepteur (22),
- le récepteur (5) et le système d'évaluation (7) sont agencés au voisinage l'un de l'autre,
- l'axe émetteur/récepteur (22) est agencé sous un angle (α) par rapport à l'axe longitudinal (20) du boîtier et l'émetteur (2) est agencé au point d'intersection (24) de l'axe émetteur/récepteur (22) avec l'axe longitudinal (20) du boîtier,
**caractérisé en ce que**
- les éléments récepteurs (12) ont une orientation basculée également de l'angle (α) par rapport au boîtier, et l'angle (α) entre l'axe émetteur/récepteur (22) et l'axe longitudinal (20) du boîtier est entre 5° et 30°.

2. Capteur optoélectronique selon la revendication 1, **caractérisé en ce que** l'émetteur (2) est agencé sur un axe longitudinal (26) de la carte à circuits imprimés au milieu par rapport à la carte à circuits imprimés (18).

3. Capteur optoélectronique selon l'une des revendications précédentes, **caractérisé en ce que** l'angle (a) entre l'axe émetteur/récepteur (22) et l'axe longitudinal du boîtier est de 13°.

4. Capteur optoélectronique selon l'une des revendications précédentes, **caractérisé en ce qu'**une distance (28) entre le récepteur (5) et le système d'évaluation (7) est inférieure à 1 mm.

5. Capteur optoélectronique selon l'une des revendications précédentes, **caractérisé en ce qu'**un tube d'un seul tenant est associé à l'émetteur (2) et au récepteur (5).

6. Capteur optoélectronique selon l'une des revendications précédentes, **caractérisé en ce qu'**une lentille réceptrice (4) est placée en avant du récepteur (5), laquelle présente sur sa bordure une surface de limitation plane.

7. Capteur optoélectronique selon l'une des revendications précédentes, **caractérisé en ce qu'**il est prévu, entre la carte à circuits imprimés (18) et le tube, un écran métallique avec au moins deux ouvertures pour l'émetteur (2) et pour le récepteur (5).

8. Capteur optoélectronique selon l'une des revendications précédentes, **caractérisé en ce que** la lumière émise traverse une lentille d'émission pour focaliser la lumière émise et présente un diamètre inférieur à 2 mm à une distance de 50 mm de l'émetteur (2)

9. Capteur optoélectronique selon l'une des revendications précédentes, **caractérisé en ce que** la carte à circuits imprimés (18) comprend un connecteur (36, 38) pour au moins deux câbles, et **en ce qu'**il est prévu une platine adaptatrice à souder (30), laquelle est soudée avec la carte à circuits imprimés (18) et destinée au raccordement d'au moins un autre câble.
